# EUROPÄISCHE PATENTSCHRIFT

(11) **EP 1 365 118 B1**
(45) Veröffentlichungstag und Bekanntmachung des Hinweises auf die Patenterteilung: **09.11.2005**
(21) Anmeldenummer: 03009225.8
(22) Anmeldetag: 23.04.2003
(51) Int. Cl.: F01N 3/20, B01D 53/94, F01N 3/36

(54) **Verfahren und Katalysator zur Verbesserung der Wirksamkeit des zur NOx-Reduktion eingedüsten Dieselkraftstoffes**
Method and catalyst for increasing the efficiency of Diesel fuel injected for NOx-reduction
Procédé et catalyseur pour améliorer l'efficacité d'un carburant Diesel injecté pour réduire les NOx

(30) Priorität: 24.04.2002 DE 10218232
(43) Veröffentlichungstag der Anmeldung: 26.11.2003
(73) Patentinhaber: ADAM OPEL AG, 65423 Rüsselsheim (DE)
(72) Erfinder: Gröger, Michael, 65239 Hochheim (DE); Zima, Peter, Dr.-Ing., 55130 Mainz (DE); Mönnig, Ronny, 65183 Wiesbaden (DE)

(56) Entgegenhaltungen:
- EP-A- 0 783 918
- WO-A-00/77353
- WO-A-01/34950
- WO-A-01/96717
- DE-A- 4 404 617
- DE-A- 19 855 384
- US-A- 5 189 876
- US-A1- 2002 029 564
- US-B1- 6 363 716

## Beschreibung

Die Erfindung betrifft ein Verfahren zur Verbesserung der Wirksamkeit des zur NOx-Reduktion vor einem SCR-Katalysator in den Abgasstrang einer Verbrennungsmaschine eingedüsten Dieselkraftstoffes und ein Katalysatordesign zur Durchführung des Verfahrens.

Die Gesetzgebung sieht zukünftig eine drastische Absenkung der Schadstoffgrenzwerte, bereits in der Richtlinie EU IV, vor. Besonders kritisch erscheint die simultane Verminderung von (Ruß-) Partikeln und Stickoxiden, da hier einerseits motorische Grenzen gesetzt sind und andererseits ein Optimierungsproblem gelöst werden muss.

Zur Verringerung des NOₓ-Gehaltes im Abgas einer mit Luftüberschuss betriebenen Brennkraftmaschine ist das sogenannte Selective-Catalytic-Reduction Verfahren (SCR-Verfahren) bekannt. Bei diesem Verfahren wird an einer Stelle stromaufwärts eines Katalysators dem Abgas ein selektiv wirkendes Reduktionsmittel, zumeist durch Einspritzen, zugeführt, durch das in einer chemischen Reaktion das im Abgas enthaltene NOₓ in dem SCR-Katalysator zu ökoneutralen Komponenten (N2, O2, H2O) umgesetzt werden kann. Das bekannte Verfahren wird zumeist bei Dieselmotoren angewandt, wobei häufig wässrige Harnstofflösungen oder Harnstoff in pulverisierter Form Verwendung finden.

Nachteilig ist, dass diese Reduktionsmittel zusätzlich on-board mitgeführt und ggf. aufbereitet werden müssen und oftmals hohe Anforderungen an die Mess- und Kontrollsysteme hinsichtlich Komplexität und Funktionsbereitschaft unter korrodierenden Bedingungen stellen.

Aus diesem Grund erscheint die direkte und ohne Aufbereitung erfolgende Verwendung von Kraftstoff als Reduktionsmittel vielversprechend. Bei Dieselmotoren kann man beispielsweise in den Ausschiebetakt des Motors mittels der normalen Motor-Einspritzanlage zusätzlichen Dieselkraftstoff direkt einspritzen oder aber vor dem vorhandenen SCR-Katalysator ein zusätzliches Einspritzventil vorsehen, durch das Dieselkraftstoff eingespritzt wird.

Wichtig ist dabei, die gemäß dem NOx- Kennfeld berechnete Kraftstoffmenge zur Stickoxid Reduzierung gleichmäßig vor dem SCR- Katalysator in den Abgasstrang einzudüsen. Jedoch gestaltet sich die Reduktionsmitteldosierung in sehr kleinen Flüssigkeitsmengen äußerst anspruchsvoll, da einerseits maximale NOx-Umsätze gewünscht werden, aber andererseits ein Durchbruch von nicht umgesetztem Reduktionsmittel unbedingt zu vermeiden ist. Problematisch ist der bei Überdosierung, insbesondere im unteren Teillastbetrieb des Fahrzeuges entstehende HC-Schlupf. Dieser resultiert wesentlich aus der zu geringen Wirksamkeit von Dieselkraftstoff als Reduktionsmittel, so dass hohe Feed-Verhältnisse angefahren werden müssen.

Aus dem vorstehend Ausgeführten ergibt sich zwangsläufig die Forderung, so wenig wie möglich von dem Reduktionsmittel (Dieselkraftstoff) einsetzen zu müssen, zumal außerdem die Forderung nach einem minimalen durch das Verfahren bedingten Kraftstoffmehrverbrauch besteht. Schließlich verlangt auch die Einhaltung von CO2-Emissionsgrenzen einen minimalen Reduktionsmittelverbrauch. Trotzdem ist der unmittelbare Einsatz von Dieselkraftstoff zur NOx-Reduktion systembedingt gegenüber alternativen Technologien aus Kostengründen und Gründen der Komplexität favorisiert.

Aus der WO 01/34950 A1 ist ein Verfahren und eine Vorrichtung zur Versorgung einer Vorrichtung zur Verminderung von NOx mit einem Reduktionsmittel bekannt, bei der Dieselkraftstoff als Reduktionsmittel verwendet wird. Der Dieselkraftstoff wird mit Sauerstoff vermischt und wird so "aktiviert", d.h. ein bedeutender Anteil des Dieselkraftstoffs wird in leichtgewichtige Kohlenwasserstoffspezien konvertiert, bevor er als Reduktionsmittel für das NOx verwendet wird. Ein partiell katalytischer Oxidationskatalysator und/oder ein Heizelement bewirken die Aktivierung des Sauerstoffs und der Kraftstoffmischung.

Ziel der vorliegenden Erfindung ist es, ein Verfahren, sowie einen dafür geeigneten Katalysator zur Verbesserung der Wirksamkeit des zur NOx-Reduktion vor einem SCR-Katalysator in den Abgasstrang einer Verbrennungsmaschine eingedüsten Dieselkraftstoffes zu schaffen, mit dem eine sichere Diesel-kraftstoffdosierung bei geringstem Verbrauch gewährleistet ist.

Zur Lösung der Aufgabe wird vorgeschlagen, dass der eingesetzte Dieselkraftstoff vor dem Umsatz der Stickoxide in einem der SCR-Reaktion vorgelagerten Prozess durch partielles katalytisches Cracken in eine aktivere Form überführt wird.

Durch das vorgeschlagene katalytische Aufspalten der Kohlenwasserstoffketten wird die Wirksamkeit des zur NOx-Reduktion in den Abgasstrang eingedüsten Dieselkraftstoffes wird deutlich erhöht.

Vorzugsweise wird nach einem weiteren Merkmal der Erfindung das partielle katalytische Cracken durch selektive Bildung einer HC-Fraktion mit 2 - 4 Kohlenstoffatomen an aciden, metallfreien Zeolithkatalysatoren (Festkörpersäuren) durchgeführt.

Da bekanntlich insbesondere die C3-Fraktion ein hochwirksames Reduktionsmittel für NOx an Cu/Co-ZSM-Katalysatoren darstellt, wird dieser Umstand zur Wirkungssteigerung des eingedüsten Dieselkraftstoffes erfindungsgemäß ausgenutzt.

Vorzugsweise wird erfindungsgemäß die HC-Fraktion in einer ersten Stufe über eine crackende Beschichtung und danach in einer zweiten Stufe über eine deNOx-aktive Beschichtung geführt. Beide Stufen lassen sich auch an einem Katalysator darstellen, wie Mehrbricksystem oder Zonenbeschichtung, wobei erfindungsgemäß als Basis sowohl der crackenden Beschichtung als auch der deNOx-aktiven Beschichtung Zeolithe oder mesoporöse und/oder gepillarte Alumosilikate vorgesehen sind. Diese Materialien bieten den Vorteil geringer Kosten bei gleichzeitiger Umweltfreundlichkeit. Auf den Einsatz teurer und toxischer Edelmetalle kann somit vollkommen verzichtet werden.

Nach einem weiteren Merkmal der Erfindung wird ein Katalysatordesign mit einem konventionellen Cordierit DPF (z. B. als Dieselpartikelfilter) als Substrat vorgeschlagen. Die Vorteile eines solchen Designs sind die optimal Durchmischung der Gasphase mit dem eingedüsten Kraftstoff und die gute räumliche Trennung der katalytischen Funktionen unterschiedlicher Beschichtungen an der Gaseinlass- bzw. -auslassseite des Filtermonoliths.

Alternativ kann aber auch ein Katalysatordesign mit einem hochzelligen Substrat Verwendung finden, wobei die Beschichtungsarten für das Cracken und die HC-deNOx in einer bestimmten Anordnung entlang des Trägers aufgebracht sind. Besonders geeignet ist ein Katalysatordesign in Zonentechnik, bei dem am Katalysatoreintritt mehr crackende als deNOx-aktive Beschichtung und zum Katalysatoraustritt hin lokal mehr deNOx-aktive Beschichtung aufgebracht ist. Zur Katalysatorverteilung auf dem Träger werden prinzipiell aber keine Einschränkungen gemacht (getrennte Zonen, Mehrbrickssystem oder Zonenverlauf).

Der Erfindung gelingt es durch ein geeignetes Katalysatordesign, den Dieselkraftstoff in einem vorgelagerten Prozess für die SCR-Reaktion zu aktivieren, um damit eine sichere Reduktionsmitteldosierung bei geringstem Verbrauch zu gewährleisten. Die Schwierigkeiten bei der Reduktionsmitteldosierung, die aus der geringen Wirksamkeit von Dieselkraftstoff als Reduktionsmittel folgen, werden durch die deutliche Steigerung der Wirksamkeit des Reduktionsmittels durch Überführen in eine aktivere Form behoben. Die Gefahr einer Überdosierung des Reduktionsmittels und damit ein erzeugter HG-Schlupf durch Verringerung der benötigten Dieselkraftstoff-Menge kann somit vermieden werden. Zusätzlich kann auf edelmetallhaltige Beschichtungen vollkommen verzichtet werden, da auch ein (Pt-haltiger) Oxidationskatalysator gegen HC - und NH₃ - Schlupf entfallen kann.

Eine Realisierungsmöglichkeit des erfindungsgemäßen Verfahrens ist in der Zeichnung schematisch dargestellt. Es zeigt:
- Fig. 1: die prinzipielle Anordnung eines Katalysators innerhalb des Abgasstranges und
- Fig. 2: Möglichkeiten des Katalysatordesigns in vier Varianten

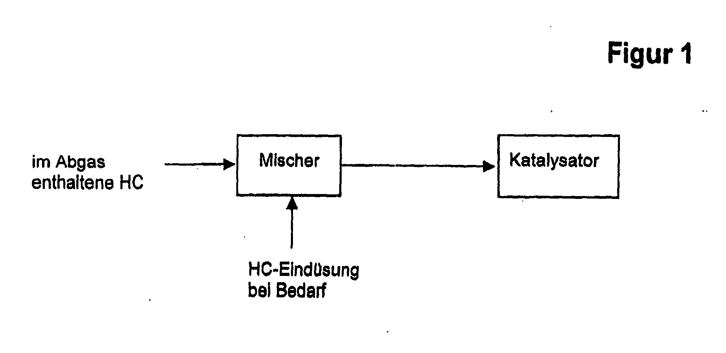

Fig. 1 zeigt in einem Blockdiagramm die prinzipielle Anordnung eines Katalysators innerhalb des Abgasstranges, dem ein Mischer vorgeschaltet wurde, um bei der Kraftstoffeindüsung eine optimale Vermischung mit dem Abgas zu gewährleisten. Erst wenn die NOx- Konvertierungsrate, z. B. feststellbar über den Sensor hinter dem Katalysator, mit dem im Abgas notwendigerweise vorhandenen HC unzureichend ist, wird die optionale HC-Eindüsung vor dem Katalysator in Betrieb genommen. Gleiches gilt, wenn die Katalysatoraktivität so gering ist, da die aus der Spätverstellung der Einspritzung stammenden HC (Postinjection) möglicherweise thermisch, chemisch so modifiziert wurden, dass ihre Wirkung als Reduktionsmittel nicht optimal ist.

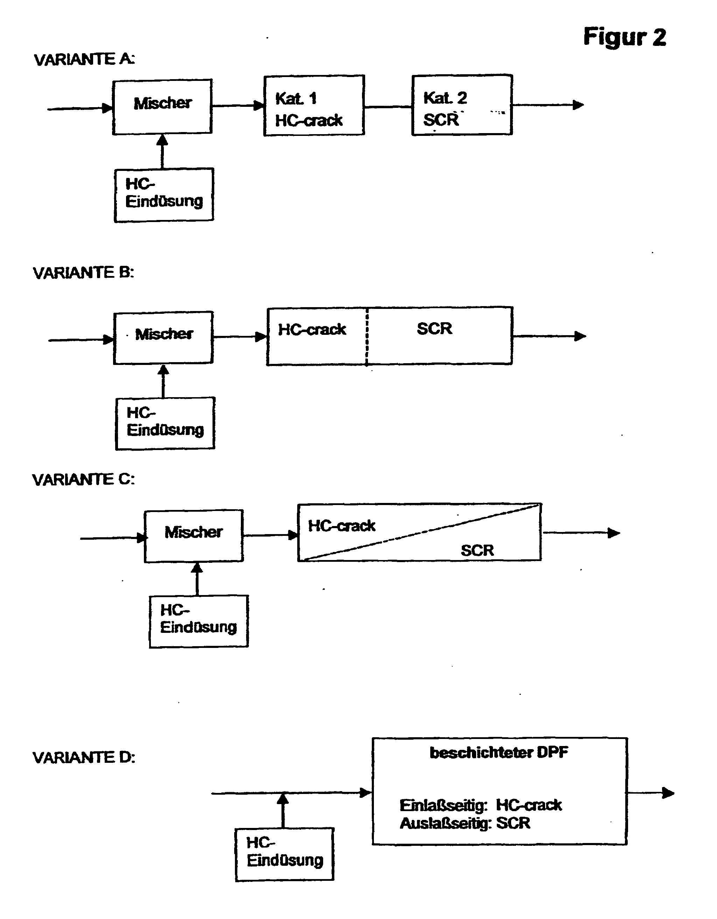

Figur 2 spezifiziert die Möglichkeiten des Katalysatordesigns in vier dargestellten Varianten.

Variante A zeigt die Hintereinanderschaltung von HC-Crackkatalysator und SCR-Kat im Abgasstrang einer Verbrennungskraftmaschine.

In der Variante B ist der Katalysator als Mehrbricksystem (HC-crack+SCR) dargestellt, während die Variante C den Katalysator mit Zonenverlaufsbeschichtung zeigt.

Bei der Variante D ist ein kombinierter Katalysator als DPF (Dieselpartikelfilter) ausgebildet, um beispielsweise den Mischer wegzulassen und beide Beschichtungen räumlich getrennt aufzubringen. Die SCR-aktive Beschichtung wird zudem vor einer Inhibierung durch (Ruß-) Partikel geschützt.

## Patentansprüche

1. Verfahren zur Verbesserung der Wirksamkeit des zur NOx-Reduktion vor einem SCR-Katalysator in den Abgasstrang einer Verbrennungsmaschine eingedüsten Dieselkraftstoffes, **dadurch gekennzeichnet, dass** der eingesetzte Dieselkraftstoff vor dem Umsatz der Stickoxide in einem der SCR-Reaktion vorgelagerten Prozess durch partielles katalytisches Cracken in eine aktivere Form überführt wird, wobei als Basis sowohl der crackenden Beschichtung als auch der deNOx-aktiven Beschichtung mesoporöse und gepillarte Alumosilikate vorgesehen werden.

2. Verfahren nach Anspruch 1, **dadurch gekennzeichnet, dass** das partielle katalytische Cracken durch selektive Bildung einer HC-Fraktion mit 2 - 4 Kohlenstoffatomen an aciden, metallfreien Zeolithkatalysatoren (Festkörpersäuren) durchgeführt wird.

3. Verfahren nach einem der Ansprüche 1 oder 2, **dadurch gekennzeichnet, dass** die HC-Fraktion in einer ersten Stufe über eine crackende Beschichtung und danach in einer zweiten Stufe über eine deNOx-aktive Beschichtung geführt wird.

4. Verfahren nach einem der Ansprüche 1 bis 3, **dadurch gekennzeichnet, dass** die beiden Stufen an einem Katalysator, wie Mehrbricksystem oder Zonenbeschichtung, dargestellt werden.

5. Katalysator zur Durchführung des Verfahrens nach einem der Ansprüche 1 bis 4 zur Verbesserung der Wirksamkeit des zur NOx-Reduktion vor einem SCR-Katalysator in den Abgasstrang einer Verbrennungsmaschine eingedüsten Dieselkraftstoffes, **dadurch gekennzeichnet, dass** der eingesetzte Dieselkraftstoff vor dem Umsatz der Stickoxide in einem der SCR-Reaktion vorgelagerten Prozess durch partielles katalytisches Cracken in eine aktivere Form überführt wird, wobei als Basis sowohl der crackenden Beschichtung als auch der deNOx-aktiven Beschichtung mesoporöse und gepillarte Alumosilikate vorgesehen werden.

6. Katalysator nach Anspruch 5, **gekennzeichnet durch** ein Katalysatordesign mit einem konventionellen Cordierit DPF (Dieselpartikelfilter) als Substrat.

7. Katalysator nach Anspruch 5, **gekennzeichnet durch** ein Katalysatordesign mit einem hochzelligen Substrat, wobei die Beschichtungsarten für das Cracken und die HC-deNOx in einer bestimmten Anordnung entlang des Trägers aufgebracht sind.

8. Katalysator nach Anspruch 7, **gekennzeichnet durch** ein Katalysatordesign in Zonentechnik, wobei am Katalysatoreintritt mehr crackende als deNOx-aktive Beschichtung und zum Katalysatoraustritt hin lokal mehr deNOx-aktive Beschichtung aufgebracht ist.

## Claims

1. Method of improving the efficiency of the diesel fuel that is injected upstream of an SCR catalytic converter into the exhaust gas system of an internal combustion engine for reducing NOₓ, **characterized in that** the employed diesel fuel prior to conversion of the nitrogen oxides in a process preceding the SCR reaction is converted by partial catalytic cracking into a more active form, wherein as a base both of the cracking coating and of the NOₓ-removing active coating mesoporous and pillared aluminosilicates are provided.

2. Method according to claim 1, **characterized in that** the partial catalytic cracking is carried out by selective formation of an HC fraction having 2 - 4 carbon atoms at acid, metal-free zeolith-catalyzers (solid acids).

3. Method according to one of claims 1 or 2, **characterized in that** the HC fraction is conveyed in a first stage over a cracking coating and then in a second stage over a NOₓ-removing active coating.

4. Method according to one of claims 1 to 3, **characterized in that** the two stages are represented by one catalytic converter, such as a multi-brick system or zonal coating.

5. Catalytic converter for implementing the method according to one of claims 1 to 4 for improving the efficiency of the diesel fuel that is injected upstream of an SCR catalytic converter into the exhaust gas system of an internal combustion engine for reducing NOₓ, **characterized in that** the employed diesel fuel prior to conversion of the nitrogen oxides in a process preceding the SCR reaction is converted by partial catalytic cracking into a more active form, wherein as a base both of the cracking coating and of the NOₓ-removing active coating mesoporous and pillared aluminosilicates are provided.

6. Catalytic converter according to claim 5, **characterized by** a catalytic converter design with a conventional cordierite DPF (diesel particle filter) as a substrate.

7. Catalytic converter according to claim 5, **characterized by** a catalytic converter design with a highly cellular substrate, wherein the types of coating for the cracking and the HC NOₓ-removal are provided in a specific order along the carrier.

8. Catalytic converter according to claim 7, **characterized by** a zonal catalytic converter design, wherein at the catalytic converter inlet more cracking than NOₓ-removing active coating is provided and towards the catalytic converter outlet locally more NOₓ-removing active coating is provided.

## Revendications

1. Procédé d'amélioration de l'efficacité du carburant Diesel injecté, pour la réduction des NOx, en amont d'un catalyseur SCR (à réduction catalytique sélective), dans le circuit de gaz d'échappement d'un moteur à combustion interne, **caractérisé en ce que** le carburant Diesel utilisé, avant la conversion des oxydes d'azote en un processus se déroulant en amont de la réaction SCR, est transformé en une forme plus active, par un craquage catalytique partiel, des alumino-silicates mésoporeux et colonnaires étant prévus, en tant que base, tant du revêtement assurant le craquage, qu'également du revêtement actif pour la fonction de NOx ou de réduction des NOx.

2. Procédé selon la revendication 1, **caractérisé en ce que** le craquage catalytique partiel est accompli par formation sélective d'une fraction HC, comprenant de 2 à 4 atomes de carbone, sur des catalyseurs zéolithe acides exempts de métaux (acides de corps solides).

3. Procédé selon l'une des revendications 1 ou 2, **caractérisé en ce que** la fraction HC est guidée, dans un premier étage, sur un revêtement craquant, et ensuite, dans un deuxième étage, sur un revêtement actif pour la fonction de NOx.

4. Procédé selon l'une des revendications 1 à 3, **caractérisé en ce que** les deux étages sont présentés sur un catalyseur tels qu'un système à plusieurs briques ou à revêtement par zones.

5. Catalyseur pour la mise en oeuvre du procédé selon l'une des revendications 1 à 4, pour l'amélioration de l'efficacité du carburant Diesel injecté, pour obtenir la réduction des NOx en amont d'un catalyseur SCR, dans le circuit de gaz d'échappement d'un moteur à combustion interne, **caractérisé en ce que** le carburant Diesel injecté, avant la conversion des oxydes d'azote est transformé, lors d'un processus se déroulant en amont de la réaction SCR, par un craquage catalytique partiel en une forme plus active, des alumino-silicates, mésoporeux et colonnaires, étant prévus comme base, tant du revêtement assurant le craquage qu'également du revêtement actif pour la fonction de NOx.

6. Catalyseur selon la revendication 5, **caractérisé par** une conception de catalyseur faisant appel à un DPF (DPF: filtre à particules Diesel) classique, à la cordierite comme substrat.

7. Catalyseur selon la revendication 5, **caractérisé par** une conception de catalyseur présentant un substrat fortement cellulaire, les types de revêtements pour le craquage et pour la fonction HC-de NOx étant appliqués en un agencement déterminé le long du support.

8. Catalyseur selon la revendication 7, **caractérisé par** une conception de catalyseur dans la technique par zones, où, à l'entrée du catalyseur, est appliqué un revêtement assurant plus le craquage que l'activité de NOx et, à la sortie du catalyseur, est appliqué un revêtement présentant localement plus d'activité de NOx.
